# FASCICULE DE BREVET EUROPEEN

(11) **EP 2 410 723 B1**
(45) Date de publication et mention de la délivrance du brevet: **23.10.2013**
(21) Numéro de dépôt: 11174511.3
(22) Date de dépôt: 19.07.2011
(51) Int. Cl.: H04M 3/533, H04M 3/42

(54) **Procédé et module d'enrichissement dynamique d'un message vocal**
Verfahren und Modul zur dynamischen Verbesserung einer Sprachmitteilung
Method and module for dynamic voicemail enrichment

(30) Priorité: 23.07.2010 FR 1056052
(43) Date de publication de la demande: 25.01.2012
(73) Titulaire: Streamwide, 75010 Paris (FR)
(72) Inventeur: Gaichies, Lilian, 75013 PARIS (FR); Rain, Régis, 77000 MELUN (FR)
(74) Mandataire: Cabinet Plasseraud

(56) Documents cités:
- WO-A1-2006/036356
- WO-A1-2006/115838
- WO-A2-01/41457
- FR-A1- 2 810 487

## Description

La présente invention concerne un procédé et un module d'enrichissement dynamique d'un message vocal, ainsi qu'un produit programme d'ordinateur pour mettre en oeuvre le procédé.

Dans le domaine de la téléphonie, l'utilisation de messageries vocales est couramment répandue, afin d'informer une personne appelant une autre personne de l'indisponibilité de cette dernière.

Plus précisément, lorsque la personne à l'origine de l'appel téléphonique (désignée sous le terme d'« appelant ») cherche à joindre une autre personne (désignée sous le terme de « destinataire ») et que ce dernier n'est pas disponible, l'appelant est redirigé vers un serveur de messagerie vocale dans lequel est stocké un message vocal associé au destinataire et diffusé à l'intention de l'appelant afin de l'informer de l'indisponibilité du destinataire.

Un tel message vocal est préenregistré au sein du serveur de messagerie vocale et peut être personnalisé par le destinataire lui-même. Cependant, ce type de message vocal classique présente certaines limitations en termes de fonctionnalité.

En particulier, le même message vocal est toujours diffusé, indépendamment de la situation ou du statut du destinataire. Il n'est en particulier pas possible d'adapter en temps réel la teneur de l'information fournie dans le message vocal en fonction d'éléments contextuels liés au destinataire de l'appel téléphonique.

De plus, tous les appelants vont avoir accès au même message vocal, indépendamment de leur lien ou relation avec le destinataire de l'appel. Il n'est pas possible de personnaliser le message vocal en fonction de l'appelant. La demande WO 2006/115838 décrit un système de messagerie vocale où le destinataire d'un appel est identifié dans un serveur de messagerie vocale tandis qu'une information de présence est obtenue au sujet de ce destinataire dans un serveur de présence, le message vocal étant généré en fonction de cette information de présence. Un tel système met en jeu des tables d'informations stockées sur différents serveurs, ce qui nécessite donc des mises à jour et des synchronisations régulières afin de maintenir une certaine concordance entre les identifiants.

Il n'est donc pas actuellement possible d'adapter les messages vocaux de manière dynamique en fonction du contexte du destinataire de l'appel téléphonique ou de l'appelant cherchant à le joindre.

La présente invention vise à remédier à ces inconvénients.

Elle propose à cet effet un procédé d'enrichissement dynamique d'un message vocal associé au destinataire d'un appel téléphonique par un serveur de messagerie vocale, ce procédé comprenant l'obtention auprès d'un serveur tiers d'au moins une information complémentaire, sous forme de données numérique, associée au destinataire et l'insertion de l'information complémentaire obtenue dans le message vocal afin d'obtenir un message vocal enrichi, l'étape d'obtention comprenant, suite à la réception par le serveur tiers d'une requête en enrichissement émise par le serveur de messagerie vocale, l'identification du destinataire par le serveur tiers, au moyen de son numéro de téléphone transmis dans la requête en enrichissement, la préparation de l'information complémentaire à transmettre en fonction de l'identité du destinataire et l'envoi de ladite information complémentaire par le serveur tiers vers le serveur de messagerie vocale, et l'étape d'insertion comprenant, au niveau du serveur de messagerie vocale, la conversion de l'information complémentaire sous forme de donnée numérique en un message audio et l'assemblage du message audio avec le message vocal associé au destinataire afin d'obtenir le message vocal enrichi.

Avantageusement, l'étape d'obtention comprend en outre l'identification par le serveur tiers de l'appelant émettant l'appel téléphonique au moyen de son numéro de téléphone transmis dans la requête en enrichissement et la préparation de l'information complémentaire à transmettre en fonction de l'identité de l'appelant. Ceci permet d'adapter la teneur du message enrichi en fonction de la personne à l'origine de l'appel téléphonique.

Dans un mode de réalisation, l'information complémentaire est une information de localisation du destinataire obtenue à partir d'un serveur tiers appartenant à un réseau de téléphonie mobile auquel souscrit le destinataire, ce qui permet d'indiquer à l'appelant, de façon dynamique, où se trouve le destinataire.

Dans un autre mode de réalisation, l'information complémentaire est une information décrivant le statut du destinataire obtenue à partir d'un serveur tiers appartenant à un système de gestion d'un réseau social auquel adhère le destinataire, ce qui permet de fournir cette information de statut à l'appelant.

Dans un autre mode de réalisation, l'information complémentaire est une information décrivant le statut du destinataire obtenue à partir d'un serveur tiers appartenant à un système de messagerie instantanée auquel participe le destinataire, ce qui permet de fournir cette information de statut à l'appelant.

La présente invention propose également un module d'enrichissement dynamique d'un message vocal apte à être installé dans un serveur de messagerie vocale pour mettre en oeuvre un procédé d'enrichissement dynamique selon l'une des revendications précédentes afin de produire un message vocal enrichi.

Dans un mode de réalisation avantageux, le module d'enrichissement dynamique comporte un module de communication, apte à transmettre une requête en enrichissement à un serveur tiers et à recevoir dudit serveur tiers une information complémentaire associée au destinataire d'un appel téléphonique, sous forme de donnée numérique, et un module de conversion apte à convertir l'information complémentaire sous forme de donnée numérique en un message audio.

La présente invention propose, en outre, un serveur de messagerie vocale comprenant le module d'enrichissement dynamique tel que décrit ci-avant.

La présente invention propose aussi un programme d'ordinateur, destiné à être stocké dans une mémoire d'une unité de traitement informatique, sur un support de mémoire amovible ou sur un support de lecture informatique, et qui comporte des instructions pour exécuter les étapes du procédé d'enrichissement dynamique tel que décrit précédemment. Un tel programme doit être considéré comme un produit dans le cadre de la protection qui est recherchée par la présente demande de brevet.

L'invention sera mieux comprise à la lecture de la description qui suit, faite uniquement à titre d'exemple, et en référence aux figures en annexe dans lesquelles :
- la figure 1 est une vue schématique d'un système de communication comprenant un module d'enrichissement dynamique d'un message vocal selon la présente invention ; et
- la figure 2 illustre les étapes d'un procédé d'enrichissement dynamique d'un message vocal selon la présente invention.

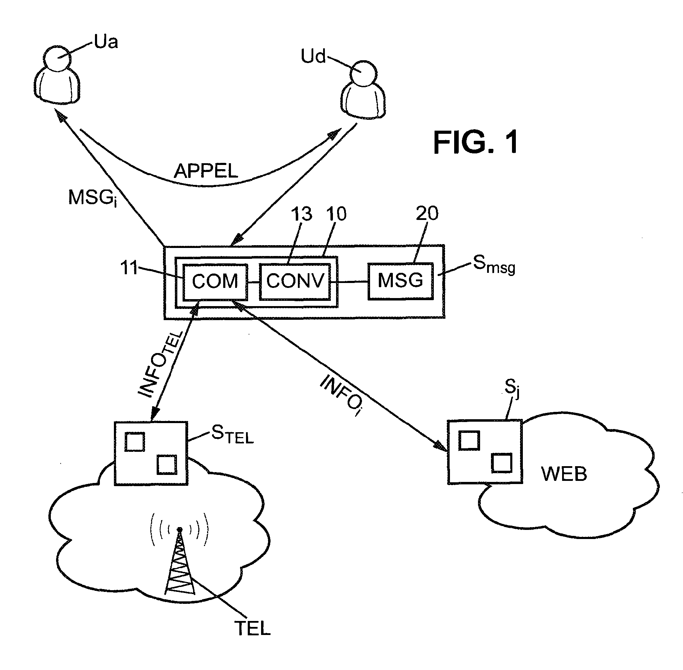

La **figure 1** représente schématiquement un système de communication comprenant un module 10 d'enrichissement dynamique d'un message vocal selon la présente invention.

Sur cette figure 1 est représenté un appelant, désigné par Ua, cherchant à joindre téléphoniquement un destinataire, désigné par Ud.

Lorsque cet appel téléphonique échoue, par exemple en cas d'indisponibilité du destinataire Ud, l'appelant Ua est redirigé vers un serveur de messagerie vocale S_{msg} qui diffuse alors un message vocal MSG, enregistré dans des moyens de mémorisation 20, à destination de l'appelant Ua.

Dans la présente invention, un module 10 d'enrichissement dynamique est installé dans le serveur de messagerie vocale S_{msg} afin d'enrichir le message vocal MSG avec un certain nombre d'informations complémentaires associées au destinataire Ud.

Ce module d'enrichissement 10 est ainsi arrangé, d'une part, pour obtenir auprès d'un serveur tiers au moins une information complémentaire associée au destinataire Ud de l'appel téléphonique, laquelle va servir à enrichir le message vocal MSG.

Ce serveur tiers peut être par exemple un serveur Sⱼ appartenant à système de gestion d'un réseau social (illustré par le symbole WEB sur la figure 1) auquel adhère le destinataire, comme par exemple le réseau Facebook ou Twitter, ou à un serveur de messagerie instantanée. Dans ce cas, l'information complémentaire obtenue INFOᵢ peut être une information décrivant le statut du destinataire Ud telle qu'elle apparaît sur ce réseau social.

Ce serveur tiers peut également être un serveur S_{TEL} appartenant à un réseau de téléphonie mobile (illustré par « TEL » sur la figure 1) auquel souscrit le destinataire. Dans ce cas, l'information complémentaire obtenue INFO_{TEL} peut être une information sur la localisation du destinataire Ud telle que déterminée par le réseau de téléphonie mobile en question.

Ce module d'enrichissement 10 est arrangé, d'autre part, pour insérer l'information complémentaire obtenue auprès du serveur tiers dans le message vocal MSG associé au destinataire.

Le module d'enrichissement 10 permet alors d'obtenir un message vocal enrichi MSGᵢ, basé sur l'assemblage du message vocal MSG initialement enregistré ainsi que sur la ou les information(s) complémentaire(s) obtenues.

Ainsi, dans un mode particulier de réalisation, le module d'enrichissement comporte un module de communication 11 qui est apte à transmettre une requête en enrichissement au serveur tiers et à recevoir en retour, de ce serveur tiers, la ou les information(s) complémentaire(s) requise(s).

Comme cette information complémentaire requise est dans la plupart des cas sous forme de donnée numérique, le module d'enrichissement comporte avantageusement, en outre, un module de conversion 13 apte à convertir la donnée numérique représentant l'information complémentaire en un message audio pouvant être inséré avant ou après le message vocal initial MSG, voire au sein même de ce message vocal MSG.

Le module 10 d'enrichissement dynamique tel que décrit ci-avant peut prendre la forme d'un module logiciel installé au sein d'un serveur de messagerie vocal et apte à communiquer avec des applications logicielles auprès desquelles il cherche à obtenir des informations complémentaires sur le destinataire Ud.

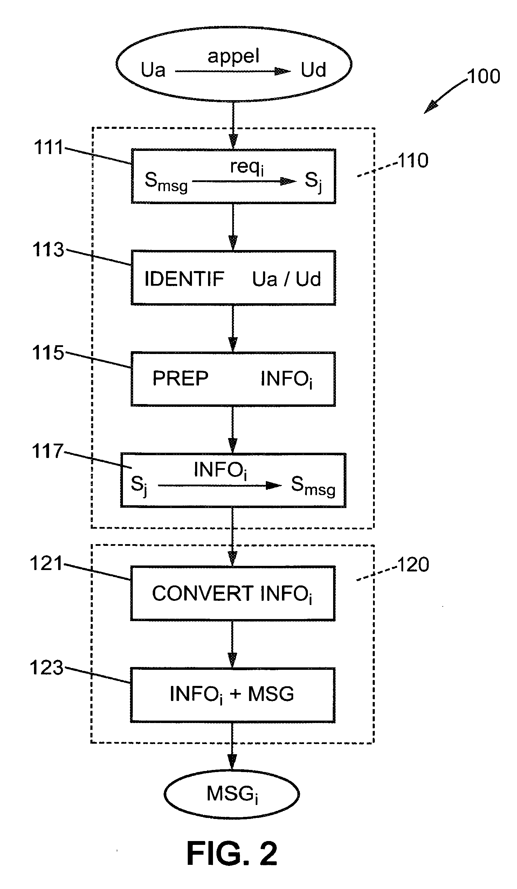

La **figure 2** illustre les étapes d'un procédé 100 d'enrichissement dynamique d'un message vocal selon la présente invention.

Ce procédé 100 d'enrichissement dynamique peut démarrer suite à l'échec de l'appel téléphonique, par exemple du fait de l'indisponibilité du destinataire Ud, à l'émission d'un appel téléphonique de l'appelant Ua vers le destinataire Ud et comprend deux étapes principales 110 et 120 :
- l'obtention (étape 110) auprès d'un serveur tiers Sⱼ d'au moins une information complémentaire INFOᵢ associée au destinataire Ud ;
- l'insertion (étape 120) de cette information complémentaire INFOᵢ ainsi obtenue dans le message vocal MSG.

Un message vocal enrichi MSGᵢ, correspondant au message vocal MSG initial enrichi avec l'information complémentaire INFOᵢ obtenue, est ainsi généré et peut être communiqué à l'appelant Ua.

L'étape d'obtention 110 peut avantageusement comprendre une étape 111 de transmission, par le serveur de messagerie vocale S_{msg}, d'une requête en enrichissement (désignée par reqᵢ) à un, voire plusieurs, serveur(s) tiers Sⱼ dans le but d'obtenir un certain nombre d'informations complémentaires pour enrichir le message vocal MSG à diffuser à l'attention de l'appelant Ua.

Suite à la réception de cette requête en enrichissement, le serveur tiers Sⱼ transmet alors l'information complémentaire requise au serveur de messagerie vocale S_{msg} (étape 117).

Dans un mode de réalisation avantageux, l'identification du destinataire Ud est effectuée par le serveur tiers Sⱼ au moyen de son numéro de téléphone transmis dans la requête en enrichissement reqᵢ (étape 113). Suite à cette identification, l'information complémentaire requise est préparée par le serveur tiers Sⱼ en fonction de l'identité du destinataire Ud (étape 115).

Dans ce mode de réalisation, le destinataire Ud est identifié facilement, de manière univoque grâce à son numéro de téléphone, ce qui permet au serveur de tiers de retrouver facilement les données associées au destinataire, par exemple les données de statut du destinataire correspondant à son compte Facebook lorsque le serveur tiers est un serveur appartenant au système de gestion de ce réseau social particulier.

Dans un autre mode de réalisation avantageux, l'identification de l'appelant Ua est également effectuée, au moyen de son numéro de téléphone transmis dans la requête en enrichissement reqᵢ, lors de l'étape d'identification 113. La préparation (étape 115) de l'information complémentaire requise est alors également effectuée en fonction de l'identité de l'appelant Ua.

Cet autre mode de réalisation permet de sélectionner les informations complémentaires à fournir pour enrichir le message vocal en fonction de l'appelant, ce qui apporte un degré supplémentaire d'adaptabilité et de dynamisme au message vocal.

La liste des informations complémentaires à fournir en fonction de l'appelant peuvent être prédéfinies et gérées au préalable par le destinataire Ud, en fonction de considérations de confidentialité. Ainsi, dans cet autre mode de réalisation, chaque appelant Ua distinct peut écouter un message vocal enrichi MSGᵢ personnalisé en fonction de sa relation avec le destinataire Ud.

Il est bien entendu possible de combiner les deux modes de réalisation précédents en procédant à l'identification de l'appelant et du destinataire, ce qui permet de cumuler les avantages de ces deux modes de réalisation.

Lorsque l'information complémentaire obtenue se présente sous la forme d'une donnée numérique, l'étape 120 d'insertion de l'information complémentaire dans le message vocal MSG comprend avantageusement une étape 121 de conversion en un message audio, autrement appelée « vocalisation » de l'information complémentaire.

Cette étape 121 de conversion est alors suivie par l'assemblage (étape 123) du message audio ainsi obtenu avec le message vocal MSG associé au destinataire Ud, afin d'obtenir un message vocal enrichi MSGᵢ.

Le message audio correspondant à l'information complémentaire peut être ajouté avant ou après le message vocal initial MSG, voire inséré au sein même de ce message vocal initial MSG.

En ce qui concerne le type d'information complémentaire pouvant être insérée dynamiquement dans le message vocal, quatre catégories principales d'information peuvent être combinées entre elles:
- le nom du destinataire Ud ;
- des données personnelles (numéro de téléphones, une adresse physique ou électronique, un prénom ou un surnom) sur ce destinataire Ud;
- des informations descriptives (un poste de travail dans une société, une fonction, des compétences, ...) sur ce destinataire Ud;
- la localisation en temps réel du destinataire Ud.

En particulier, les trois premières catégories d'information ci-dessus peuvent être fournies en une seule fois par une seule source d'information de type messagerie instantanée, serveur de contacts, ou réseau social. La location en temps réel du destinataire, quant à elle, peut être fournie en parallèle par le réseau mobile auquel appartient le destinataire, sur requête unique ou de manière continue.

Lorsque le serveur tiers Sⱼ appartient à un système de gestion d'un réseau social auquel adhère le destinataire Ud, ou à un système de messagerie instantanée, les informations complémentaires suivantes peuvent être insérées dans le message vocal enrichi MSGᵢ :
- statut de présence du destinataire Ud sur le réseau social en question (présent ou non-présent) ;
- statut descriptif de présence (par exemple « je suis content aujourd'hui ») ;
- localisation géographique (« à Paris ») ;
- statut de présence complexe (« disponible» / « « occupé » / « absent » / « en déjeuner»).

Ces informations sont fournies par ces systèmes en fonction de l'appelant Ua et de son appartenance à des listes d'amis, des groupes ou à des conversations particulières.

Dans ce cas, l'activation de ce service d'enrichissement dynamique, côté serveur tiers, peut être effectuée au moyen de l'installation d'une nouvelle application spécifique d'activation ajoutée aux outils existants déjà sur le serveur tiers.

Le procédé 100 d'enrichissement dynamique comprend alors une étape préalable d'activation de l'enrichissement, côté serveur tiers, qui peut comprendre également une sous-étape de désactivation automatique des informations de statut précédentes, autres que la géolocalisation, afin de confier l'exclusivité de la gestion des informations complémentaires à transmettre au réseau social où la fonctionnalité d'enrichissement dynamique est nouvellement activée.

Lorsque le serveur tiers appartient à un système de téléphonie mobile auquel souscrit le destinataire Ud, les informations complémentaires suivantes peuvent être insérées dans le message vocal enrichi :
- localisation géographique automatiquement déduite du positionnement du terminal du destinataire (géolocalisation) ;

Dans un mode de réalisation dit « automatique », les informations complémentaires requises sont fournies de manière automatique par le serveur tiers, à intervalles réguliers ou en fonction d'évènements externes. Cela peut être le cas pour les informations de géolocalisation du destinataire Ud, d'interconnexion avec une messagerie instantanée ou un réseau social auxquels est connecté ce destinataire. Ce mode présente l'avantage de fournir une information « fraîche », en temps réel, sans aucun effort de l'utilisateur, en contrepartie d'une perte relative de contrôle sur ce type d'information.

Dans un autre mode de réalisation dit « manuel », les informations complémentaires spécifiques sont requises par l'appelant Ua, par exemple par le biais de l'interface utilisateur de son propre terminal ou par un accès dédié à une messagerie web.

Le message vocal enrichi MSGᵢ peut ainsi proposer un menu dynamique donnant accès à un certain nombre d'informations complémentaires (par exemple « pressez la touche 1 pour obtenir la localisation du destinataire », « pressez la touche 2 pour obtenir le statut Facebookdu destinataire », « pressez la touche 3 pour savoir si le destinataire est en ligne en ce moment » etc.), et l'appelant peut choisir grâce à ce menu dynamique l'information particulière qu'il désire obtenir sur le destinataire.

Dans un autre mode de réalisation dit « semi-automatique », il est également possible d'ajouter une caractéristique au menu d'interface de récupération téléphonique, proposant aux utilisateurs d'enregistrer leur statut une fois qu'ils ont écouté leurs messages.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention. De nombreuses variantes de réalisation sont possibles.

Ainsi, dans les revendications, le mot « comprenant » n'exclue pas d'autres éléments et l'article indéfini « un/une » n'exclue pas une pluralité.

De plus, les différents modes de réalisations décrits précédemment peuvent être combinés entre eux. Il est ainsi possible d'enrichir dynamiquement un message vocal avec une pluralité d'informations complémentaires telles que décrites ci-avant, en accédant à une pluralité de serveur tiers permettant d'obtenir de telles informations complémentaires.

## Revendications

1. Procédé d'enrichissement dynamique d'un message vocal (MSG) associé au destinataire (Ud) d'un appel téléphonique par un serveur de messagerie vocale (S_{msg}), le procédé comprenant l'obtention (110) auprès d'un serveur tiers d'au moins une information complémentaire, sous forme de données numérique, associée audit destinataire et l'insertion (120) de l'information complémentaire obtenue dans le message vocal afin d'obtenir un message vocal enrichi (MSGᵢ),
l'étape d'obtention (110) comprenant, suite à la réception (111) par le serveur tiers d'une requête en enrichissement (reqᵢ) émise par le serveur de messagerie vocale (S_{msg}), l'identification (113) du destinataire (Ud) par le serveur tiers, au moyen de son numéro de téléphone transmis dans la requête en enrichissement (reqᵢ), la préparation (115) de l'information complémentaire à transmettre en fonction de l'identité du destinataire et l'envoi (117) de ladite information complémentaire par le serveur tiers vers le serveur de messagerie vocale, et
l'étape d'insertion (120) comprenant, dans le serveur de messagerie vocale (S_{msg}), la conversion (121) de l'information complémentaire sous forme de donnée numérique en un message audio et l'assemblage (123) du message audio avec le message vocal associé au destinataire afin d'obtenir le message vocal enrichi (MSGᵢ).

2. Procédé selon la revendication 1, **caractérisé en ce que** l'étape d'obtention comprend en outre l'identification (113) par le serveur tiers de l'appelant (Ua) émettant l'appel téléphonique au moyen de son numéro de téléphone transmis dans la requête en enrichissement (reqᵢ) et la préparation (115) de l'information complémentaire à transmettre en fonction de l'identité de l'appelant (Ua).

3. Procédé selon l'une des revendications précédentes, **caractérisé en ce que** ladite information complémentaire est une information de localisation du destinataire (Ud) obtenue à partir d'un serveur tiers (S_{TEL}) appartenant à un réseau de téléphonie mobile auquel souscrit le destinataire.

4. Procédé selon l'une des revendications précédentes, **caractérisé en ce que** l'information complémentaire est une information décrivant le statut du destinataire (Ud) obtenue à partir d'un serveur tiers (Sⱼ) appartenant à un système de gestion d'un réseau social (WEB) auquel adhère le destinataire.

5. Procédé selon l'une des revendications précédentes, **caractérisé en ce que** l'information complémentaire est une information décrivant le statut du destinataire (Ud) obtenue à partir d'un serveur tiers (Sⱼ) appartenant à un système de messagerie instantanée auquel participe le destinataire.

6. Module d'enrichissement dynamique (10) d'un message vocal (MSG) apte à être installé dans un serveur de messagerie vocale comprenant des moyens pour mettre en oeuvre un procédé d'enrichissement dynamique selon l'une des revendications précédentes afin de produire un message vocal enrichi (MSGᵢ).

7. Module d'enrichissement dynamique selon la revendication 6, **caractérisé en ce qu'**il comporte un module de communication (11), apte à transmettre une requête en enrichissement à un serveur tiers (Sⱼ) et à recevoir dudit serveur tiers une information complémentaire associée au destinataire d'un appel téléphonique, sous forme de donnée numérique, et un module de conversion (13) apte à convertir l'information complémentaire sous forme de donnée numérique en un message audio.

8. Serveur de messagerie vocale (S_{msg}) comprenant un module d'enrichissement dynamique (10) selon l'une des revendications 6 ou 7.

9. Produit programme d'ordinateur comportant des instructions de code de programme enregistrées sur un support lisible par un ordinateur, pour mettre en oeuvre les étapes du procédé d'enrichissement dynamique selon l'une quelconque des revendications 1 à 5 lorsque ledit programme fonctionne sur un ordinateur.

## Patentansprüche

1. Verfahren zum dynamischen Erweitern einer einem Empfänger (Ud) eines Telephonanrufs zugeordneten Sprachnachricht (MSG) durch einen Sprachnachrichten-Server (Smsg), wobei das Verfahren das Erhalten (110) wenigstens einer komplementären Information in der Umgebung eines weiteren Servers in Form digitaler Daten, die dem Empfänger zugeordnet ist, und das Einfügen (120) der erhaltenen komplementären Information in die Sprachnachricht, um eine erweiterte Sprachnachricht (MSGi) zu erhalten, umfasst,
wobei der Erhalteschritt (110) nach dem Empfangen (111) durch den weiteren Server einer Erweiterungsanforderung (reqi), die von dem Sprachnachrichtenserver (Smsg) ausgesendet wird, das Identifizieren (113) des Empfängers (Ud) durch den weiteren Server mittels seiner Telephonnummer, die in der Erweiterungsnachricht (reqi) übertragen wird, das Vorbereiten (115) der zu übertragenden komplementären Information als Funktion der Identität des Empfängers und das Schicken (117) der komplementären Information durch den weiteren Server zu dem Sprachnachrichtenserver umfasst, und
wobei der Einfügeschritt (120) in dem Sprachnachrichtenserver (Smsg) das Umsetzen (121) der komplementären Information in Form digitaler Daten in eine Audionachricht und das Zusammenfügen (123) der Audionachricht und der dem Empfänger zugeordneten Sprachnachricht, um die erweiterte Sprachnachricht (MSGi) zu erhalten, umfasst.

2. Verfahren nach Anspruch 1, **dadurch gekennzeichnet, dass** der Erhalteschritt außerdem das Identifizieren (113) durch den weiteren Server des Anrufers (Ua), der den Telephonanruf ausgesendet hat, mittels seiner Telephonnummer, die in der Erweiterungsanforderung (reqi) übertragen wird, und das Vorbereiten (115) der zu übertragenden komplementären Information als Funktion der Identität des Anrufers (Ua) umfasst.

3. Verfahren nach einem der vorhergehenden Ansprüche, **dadurch gekennzeichnet, dass** die komplementäre Information eine Information zum Lokalisieren des Empfängers (Ud) ist, die von einem weiteren Server (STEL) erhalten wird, der zu einem Mobiltelephonnetz gehört, an dem der Empfänger teilnimmt.

4. Verfahren nach einem der vorhergehenden Ansprüche, **dadurch gekennzeichnet, dass** die komplementäre Information eine Information ist, die den Status des Empfängers (Ud) beschreibt und von einem weiteren Server (Sj) erhalten wird, der zu einem Steuersystem eines sozialen Netzes (WEB) gehört, dem sich der Empfänger angeschlossen hat.

5. Verfahren nach einem der vorhergehenden Ansprüche, **dadurch gekennzeichnet, dass** die komplementäre Information eine Information ist, die den Status des Empfängers (Ud) beschreibt und von einem weiteren Server (Sj) erhalten wird, der zu einem Sofortnachrichtensystem gehört, an dem der Empfänger teilnimmt.

6. Modul (10) zum dynamischen Erweitern einer Sprachnachricht (MSG), das in einem Sprachnachrichtenserver installiert werden kann und Mittel umfasst, um ein Verfahren zum dynamischen Erweitern nach einem der vorhergehenden Ansprüche auszuführen, um eine erweiterte Sprachnachricht (MSGi) zu erzeugen.

7. Modul zum dynamischen Erweitern nach Anspruch 6, **dadurch gekennzeichnet, dass** es ein Kommunikationsmodul (11), das eine Erweiterungsanforderung an einen weiteren Server (Sj) übertragen und von dem weiteren Server eine dem Empfänger eines Telephonanrufs zugeordnete komplementäre Information in Form digitaler Daten empfangen kann, und ein Umsetzungsmodul (13), das die komplementäre Information in Form digitaler Daten in eine Audionachricht umsetzen kann, umfasst.

8. Sprachnachrichtenserver (Smsg), der ein Modul (10) zum dynamischen Erweitern nach einem der Ansprüche 6 oder 7 umfasst.

9. Computerprogrammprodukt, das Programmcodebefehle enthält, die in einem von einem Computer lesbaren Träger aufgezeichnet sind, um die Schritte des Verfahrens zum dynamischen Erweitern nach einem der Ansprüche 1 bis 5 auszuführen, wenn das Programm auf einem Computer abläuft.

## Claims

1. Method of dynamically enriching a voice message (MSG) associated with the receiver (Ud) of a telephone call by a voice messaging server (S_{msg}), the method comprising obtaining (110) from a third party server at least one complementary piece of information in the form of digital data associated with said receiver and inserting (120) the complementary information obtained in the voice message in order to obtain an enriched voice message (MSGᵢ),
the obtaining step (110) comprising, on receipt (111) by the third party server of an enrichment request (reqᵢ) transmitted by the voice messaging server (S_{msg}), the third party server identifies (113) the receiver (Ud) by the by means of his telephone number transmitted in the enrichment request (reqᵢ), prepares (115) the complementary information to be transmitted depending on the identity of the receiver and the third party server sends (117) said complementary information to the voice messaging server, and
the inserting step (120) comprising converting (121) the complementary information in the form of digital data into an audio message in the voice messaging server (S_{msg}), and assembling (123) the audio message with the voice message associated with the receiver in order to obtain the enriched voice message (MSGᵢ).

2. Method as claimed in claim 1, **characterised in that** the obtaining step further comprises the third party server identifying (113) the caller (Ua) transmitting the telephone call by means of his telephone number transmitted in the enrichment request (reqᵢ) and preparing (115) the complementary information to be transmitted depending on the identity of the caller (Ua).

3. Method as claimed in one of the preceding claims, **characterised in that** said complementary information is information pertaining to the location of the receiver (Ud) obtained from a third party server (S_{TEL}) belonging to a mobile telephony network to which the receiver subscribes.

4. Method as claimed in one of the preceding claims, **characterised in that** the complementary information is information describing the status of the receiver (Ud) obtained from a third party server (Sⱼ) belonging to a management system of a social network (WEB) of which the receiver is a member.

5. Method as claimed in one of the preceding claims, **characterised in that** the complementary information is information describing the status of the receiver (Ud) obtained from a third party server (Sⱼ) belonging to an instantaneous messaging system of which the receiver is a member.

6. Module (10) for dynamically enriching a voice message (MSG) designed to be installed in a voice messaging server, comprising means for implementing a dynamic enrichment method as claimed in one of the preceding claims in order to produce an enriched voice message (MSGᵢ).

7. Dynamic enrichment module as claimed in claim 6, **characterised in that** it comprises a communication module (11) configured to transmit an enrichment request to a third party server (Sⱼ) and to receive from said third party server complementary information associated with the receiver of a telephone call in the form of digital data, and a conversion module (13) configured to convert the complementary information in the form of digital data into an audio message.

8. Voice messaging server (S_{msg}) comprising a dynamic enrichment module (10) as claimed in one of claims 6 or 7.

9. Computer programme product comprising programme code instructions recorded on a support readable by a computer for implementing the steps of the dynamic enrichment method as claimed in any one of claims 1 to 5 when said programme is operating on a computer.
